# EUROPÄISCHE PATENTANMELDUNG

(11) **EP 4 803 327 A1**
(43) Veröffentlichungstag der Anmeldung: **09.09.2026**
(21) Anmeldenummer: 26158047.6
(22) Anmeldetag: 12.02.2026
(51) Int. Cl.: B60C 1/00, C08L 15/00

(54) **KAUTSCHUKMISCHUNG UND FAHRZEUGLUFTREIFEN**

(30) Priorität: 07.03.2025 DE 102025108708
(71) Anmelder: Continental Reifen Deutschland GmbH, 30175 Hannover (DE)
(72) Erfinder: Schax, Fabian, 30175 Hannover (DE)
(74) Vertreter: Continental Corporation

(57) **Zusammenfassung**

Die Erfindung betrifft eine schwefelvernetzbare Kautschukmischung, insbesondere für den Laufstreifen von Fahrzeugluftreifen, enthaltend wenigstens folgende Bestandteile:
- zumindest einen Dienkautschuk,
- 40 bis 80 phr (Gewichtsteile, bezogen auf 100 Gewichtsteile der gesamten Kautschuke in der Mischung) zumindest eines Harzes auf der Basis von Isopropenylbenzol,
- 40 bis 80 phr zumindest eines Weichmachers, der kein Mineralölweichmacher ist,
- 120 - 300 phr zumindest einer Kieselsäure und
- zumindest ein Silan-Kupplungsagens.

## Beschreibung

Die Erfindung betrifft eine schwefelvernetzbare Kautschukmischung, insbesondere für den Laufstreifen von Fahrzeugluftreifen.

Die Erfindung betrifft ferner einen Fahrzeugluftreifen mit zumindest einem Bauteil, das aus einer solchen mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Dabei bestehen Zielkonflikte zwischen den meisten der bekannten Reifeneigenschaften wie Nassgriffverhalten, Bremsverhalten, Handling-Verhalten, Rollwiderstand, Wintereigenschaften, Abriebverhalten und Reißeigenschaften. Es wurden bereits vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen.

Die EP 3 620 307 A1 offenbart Kautschukmischungen für Reifenlaufstreifen mit guten Eigenschaften im Hinblick auf Nassgriff, Rollwiderstand und Abrieb, die mehr als 100 phr Kieselsäure, mehr als 20 phr eines Harzes und mehr als 30 phr eines Mineralölweichmachers enthalten.

In der EP 4 310 139 A1 werden Kautschukmischungen beschrieben, die für verbesserten Rollwiderstand bei gleichzeitig gutem Handlingverhalten und niedrigem Abrieb 115 phr Kieselsäure, 12,5 phr pflanzliches Öl und 40 phr eines Harzes auf der Basis von Isopropenylbenzol enthalten.

Wintereigenschaften werden in der EP 3 620 307 A1 und der EP 4 310 139 A1 nicht angesprochen.

Der Erfindung liegt die Aufgabe zugrunde, Kautschukmischungen für die Laufstreifen von Fahrzeugluftreifen bereitzustellen, die bei Reifen zu einer Verbesserung des Zielkonfliktes aus Rollwiderstand, Wintereigenschaften und Nassgriff führen.

Gelöst wird diese Aufgabe erfindungsgemäß durch eine schwefelvernetzbare Kautschukmischung, insbesondere für den Laufstreifen von Fahrzeugluftreifen, die wenigstens folgende Bestandteile enthält:
- zumindest einen Dienkautschuk,
- 40 bis 80 phr (Gewichtsteile, bezogen auf 100 Gewichtsteile der gesamten Kautschuke in der Mischung) zumindest eines Harzes auf der Basis von Isopropenylbenzol,
- 40 bis 80 phr zumindest eines Weichmachers, der kein Mineralölweichmacher ist,
- 120 - 300 phr zumindest einer Kieselsäure und
- zumindest ein Silan-Kupplungsagens.

Überraschenderweise hat sich herausgestellt, dass die spezielle Kombination eines Harzes auf der Basis von Isopropenylbenzol mit einem Weichmacher, der kein Mineralölweichmacher ist, in den angegebenen hohen Mengen in Kautschukmischungen mit einem hohen Anteil an Kieselsäure zu einer Verbesserung der Vulkanisateigenschaften führt, die im Reifen bei Verwendung als Laufstreifen zu einem gutem Rollwiderstand, guten Nassgriff und verbesserten Wintereigenschaften führt.

Die erfindungsgemäße Kautschukmischung zeichnet sich zusätzlich durch die Verwendung eines Weichmachers, der kein Mineralölweichmacher ist, durch eine verbesserte Nachhaltigkeit aus.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen festen Kautschuke bezogen.

Erfindungsgemäß enthält die Kautschukmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der bzw. die Dienkautschuk(e) ist bzw. sind dabei bevorzugt ausgewählt aus der Gruppe bestehend aus natürlichem Polyisopren (NR), synthetischem Polyisopren (IR), epoxidiertem Polyisopren (ENR), Butadien-Kautschuk (BR), Butadien-Isopren-Kautschuk, Styrol-Butadien-Kautschuk (SBR), insbesondere lösungspolymerisiertem Styrol-Butadien-Kautschuk (SSBR) und emulsionspolymerisiertem Styrol-Butadien-Kautschuk (ESBR), Styrol-Isopren-Kautschuk, Flüssigkautschuken mit einem Molekulargewicht M_{w} von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurten, Riemen und Schläuchen, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Gemäß einer besonders bevorzugten Ausführungsform der Erfindung enthält die Kautschukmischung als Dienkautschuke zumindest ein natürliches Polyisopren (NR), zumindest einen Butadienkautschuk (BR) und zumindest einen lösungspolymerisierten Styrol-Butadien-Kautschuk (SSBR). Eine derartige Kautschukmischung ist insbesondere für den Laufstreifen von Fahrzeugreifen geeignet.

Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden. Natürliche Polyisoprene aus verschiedenen Quellen können auch im Verschnitt eingesetzt werden. Der cis-1,4-Anteil im natürlichen Polyisopren ist größer 99 Gew.-%.

Als Butadienkautschuk (Polybutadien, BR) können alle dem Fachmann bekannten Typen eingesetzt werden. Vorzugsweise solche, die einen cis-Anteil von weniger als 90 Gew.-% aufweisen. Darunter fallen die sogenannten low-cis-Typen, wobei Butadienkautschuk mit einem cis-Anteil kleiner als 90 Gew.-% als low-cis-Typ bezeichnet wird. Vorzugsweise wird ein low-cis- Butadienkautschuk mit einem cis-Anteil zwischen 20 bis 50 Gew.-%, z. B. Li-BR (Lithium-katalysierter Butadien-Kautschuk), eingesetzt.

Die Styrol-Butadien-Kautschuke (SSBR) können unterschiedlichste, dem Fachmann bekannte Typen eingesetzt werden.

Sowohl die Butadienkautschuke als auch die Styrol-Butadien-Kautschuke können mit unterschiedlichsten Funktionalisierungen (Modifizierungen) endgruppenmodifiziert und/oder entlang der Polymerketten funktionalisiert sein. Bei der Funktionalisierung kann es sich um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handeln. Es kommen aber auch weitere, der fachkundigen Person bekannte Modifizierungen bzw. Funktionalisierungen in Frage. Es können auch unterschiedlichen Funktionalisierungen an beiden Kettenenden vorgesehen sein. Bestandteil der Funktionalisierungen können auch Metallatome sein.

Gemäß einer bevorzugten Ausbildung der Erfindung enthält die schwefelvernetzbare Kautschukmischung für ein gutes Eigenschaftsprofil der Vulkanisate
- bis zu 20 phr zumindest eines natürlichen Polyisoprens (NR)
- 10 bis 80 phr, vorzugsweise 10 bis 30 phr, zumindest eines Butadienkautschuks (BR) und
- 10 bis 80 phr, vorzugsweise 60 bis 90 phr, zumindest eines lösungspolymerisierten Styrol-Butadien-Kautschuks (SSBR).

Vorzugsweise ist zumindest einer der eingesetzten Dienkautschuke mit den oben genannten Funktionalisierungen (Modifizierungen) endgruppenmodifiziert und/oder entlang der Polymerketten funktionalisiert. Dies verbessert das Netzwerk aus Polymer und Füllstoff. Sind mehr als zwei Dienkautschuke in der Kautschukmischung vorhanden, ist es besonders bevorzugt, wenn zumindest zwei Dienkautschuke, vorzugsweise Butadienkautschuk und Styrol-Butadien-Kautschuk, mit den oben genannten Funktionalisierungen (Modifizierungen) endgruppenmodifiziert und/oder entlang der Polymerketten funktionalisiert sind.

Die Kautschukmischung enthält 40 bis 80 phr, bevorzugt 40 bis 60 phr, zumindest eines Harzes auf der Basis von Isopropenylbenzol. Harze auf der Basis von Isopropenylbenzol, auch AMS-Harze (α-Methylstyrol-Harze) genannt, fallen als Copolymere bei der Polymerisation der im Leichtöl des Steinkohlenteers enthaltenen ungesättigten Verbindungen an. Sie sind z. B. unter dem Namen Sylvatraxx^{®} 4401 von der Firma Kraton Chemicals SAS erhältlich.

Die erfindungsgemäße Kautschukmischung enthält 40 bis 80 phr, vorzugsweise 40 bis 60 phr, zumindest eines Weichmachers, der kein Mineralölweichmacher ist. Es ist möglich, einen Weichmacher oder mehrere Weichmacher in Kombination einzusetzen.

Als Weichmacher, die keine Mineralölweichmacher sind, können unterschiedlichste Weichmacher, wie pflanzliche Öle, Faktisse oder Flüssig-Polymere mit einem Gewichtsmittel der Molekulargewichtsverteilung M_{w} gemäß GPC von 60.000 g/mol oder weniger, wie z. B. flüssiges Polybutadien, eingesetzt werden. Der oder die Weichmacher werden bei der Herstellung der erfindungsgemäßen Kautschukmischung bevorzugt in wenigstens einer Grundmischstufe zugegeben.

Gemäß einer vorteilhaften Weiterbildung der Erfindung wird als Weichmacher ein pflanzliches Öl, wie Sonnenblumenöl, Leinöl, Rapsöl o. Ä., eingesetzt. Dies ist aus ökologischer und ökonomischer Sicht von Vorteil und bietet in Reifen vorteilhafte Eigenschaften. Besonders bevorzugt ist, wenn das pflanzliche Öl Rapsöl ist.

Die Kautschukmischung enthält 120 - 300 phr, vorzugsweise 120 bis 200 phr, zumindest einer Kieselsäure. Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen. Geeignet sind auch aus Reisschalen-Asche hergestellte Kieselsäuren.

Zur Verbesserung der Verarbeitbarkeit und zur Anbindung der Kieselsäure an den Dienkautschuk in kieselsäurehaltigen Mischungen wird zumindest ein Silan-Kupplungsagens in der Kautschukmischung eingesetzt. Die Silan-Kupplungsagenzien können auch im Gemisch eingesetzt werden.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Vorzugsweise ist das zumindest eine Silan-Kupplungsagens in der Kautschukmischung 3,3'-Bis(triethoxysilylpropyl)disulfid (TESPD).

Die Silan-Kupplungsagenzien werden vorzugsweise in Mengen von 1 bis 15 phf eingesetzt. Die in dieser Schrift verwendete Angabe phf (parts per hundred parts of filler by weight) ist dabei die in der Kautschukindustrie gebräuchliche Mengenangabe für Kupplungsagenzien für polare Füllstoffe. Im Rahmen der vorliegenden Anmeldung bezieht sich phf auf das vorhandene Kieselsäure, das heißt, dass andere eventuell vorhandene Füllstoffe wie Ruß nicht in die Berechnung der Menge an Silan-Kupplungsagens mit eingehen.

Die Kautschukmischung kann neben Kieselsäure auch weitere Füllstoffe Ruße, Alumosilicate, Kreide, Stärke, Magnesiumoxid, Titandioxid oder Kautschukgele in üblichen Mengen enthalten, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

In der Kautschukmischung können neben den vorgenannten Weichmachern, die keine Mineralölweichmacher sind, auch Mineralölweichmacher enthalten sein. Als Mineralölweichmacher können alle dem Fachmann bekannten Mineralölweichmacher wie aromatische, naphthenische oder paraffinische Mineralölweichmacher, wie z.B. MES (mild extraction solvate) oder RAE (Residual Aromatic Extract) oder TDAE (treated distillate aromatic extract), bevorzugt mit einem Gehalt an polyzyklischen Aromaten von weniger als 3 Gew.-% gemäß Methode IP 346, eingesetzt werden. Vorzugsweise ist die erfindungsgemäße Kautschukmischung jedoch frei von Mineralölweichmachern.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS), und/oder eines Guanidin-Beschleunigers, wie Diphenylguanidin (DPG).

Zum Erhalt einer angemessenen Netzwerkdichte in der Polymermatrix ist es von Vorteil, wenn die Kautschukmischung mehr als 5 phr Vernetzungschemikalien, enthaltend Schwefel und Vulkanisationsbeschleuniger, aufweist.

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung in Gummiprodukten, insbesondere in Fahrzeugluftreifen, herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Sie kann in unterschiedlichen Bauteilen von Fahrzeugluftreifen zum Einsatz kommen. Vorzugsweise wird sie für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.
Die Vergleichsmischungen sind dabei mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

In den Mischungen 2(V) und 4(E) mit Rapsöl wurde der Anteil an Vulkanisationschemikalien erhöht, um die Netzwerkdichte aufrecht zu erhalten.

Anschließend wurde der Verlustfaktor tan δ (10%) der Mischung mittels RPA (= *engl.* "rubber process analyzer") in Anlehnung an ASTM D6601 vom zweiten Dehnungsdurchlauf bei 1 Hz, 70°C und 10 % Dehnung im vulkanisierten, konditionierten Zustand ermittelt.

Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur gemäß ISO 868
- Rückprallelastizität bei Raumtemperatur gemäß ISO 4662
- Zugfestigkeit bei Raumtemperatur gemäß ISO 37
- dynamischer Speichermodul E' bei -15 °C und einer Dehnung von 0,15 % (E'(0,15%)) aus dynamisch-mechanischer Messung in Anlehnung an ISO 4664-1, Dehnungsdurchlauf (engl. "strain sweep") bei einer Vorkompression von 20 %, einer Frequenz von 10 Hz und einem Dehnungsbereich zwischen 0,15 % und 8%

Der Verlustfaktor tan δ (10%) mittels RPA lässt sich mit dem Rollwiderstand korrelieren. Ein niedriger Verlustfaktor tan δ (10%) mittels RPA steht für einen niedrigen Rollwiderstand.
Die Rückprallelastizität bei Raumtemperatur dient als Maß für den Nassgriff. Je kleiner der Wert, desto besser ist der Nassgriff.
Als Indikator für eine gute Eignung für das Bremsen auf eisigem und schneeigem Untergrund, also für gute Wintereigenschaften, kann der dynamische Speichermodul E' bei -15 °C dienen. Je niedriger der dynamische Speichermodul E' bei -15 °C, desto besser sind die Wintereigenschaften.

**Tabelle 1**

| **Bestandteile** | **Einheit** | **1(V)** | **2(V)** | **3(V)** | **4(E)** |
|---|---|---|---|---|---|
| Naturkautschuk | phr | 12 | 12 | 12 | 12 |
| BR^{a} | phr | 18 | 18 | 18 | 18 |
| SSBR^{b} | phr | 70 | 70 | 70 | 70 |
| Kieselsäure^{c} | phr | 155 | 155 | 155 | 155 |
| Mineralölweichmacher^{d} | phr | 100 | 50 | 50 | - |
| Rapsöl | phr | - | 50 | - | 50 |
| AMS-Harz^{e} | phr | - | - | 50 | 50 |
| Alterungsschutzmittel | phr | 2 | 2 | 2 | 2 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| Silan-Kupplungsagens^{f} | phr | 6,84 | 6,84 | 6,84 | 6,84 |
| DPG | phr | 2 | 2 | 2 | 2 |
| CBS | phr | 2 | 2,8 | 2 | 2,8 |
| Schwefel | phr | 2 | 2,8 | 2 | 2,8 |

| **Eigenschaften** | | | | | |
|---|---|---|---|---|---|
| tan δ (10%) | - | 0,237 | 0,236 | 0,288 | 0,258 |
| Shorehärte bei RT | ShoreA | 68,9 | 64,7 | 71,3 | 70 |
| Rückprallelast. bei RT | % | 18,8 | 22,6 | 13,6 | 16,6 |
| Zugfestigkeit bei RT | MPa | 7,9 | 9,5 | 7,4 | 9.0 |
| E'(0,15%) bei -15 °C | MPa | 183,1 | 65,6 | 431,6 | 179,2 |

| | | | | | |
|---|---|---|---|---|---|
| ^{a} Asaprene^{®} YB03, Asahi, funktionalisierter, lösungspolymerisierter Butadienkautschuk mit Funktionalisierung für die Polymer/Kieselsäure-Wechselwirkung, T_{g} = -90 °C, cis-Anteil = 38,6 % ^{b} Sprintan^{®} SLR-4601, Synthos, funktionalisiertes, lösungspolymerisiertes Styrol-Butadien-Copolymer mit Funktionalisierung für die Polymer/Kieselsäure- und die Polymer/Ruß-Wechselwirkung, T_{g} = -23 °C ^{c} Ultrasil^{®} VN3, Evonik, BET-Oberfläche = 180 m²/g (gemessen mit Stickstoff) ^{d} Vivatec 500, Hansen&Rosenthal, TDEA (treated distillate aromatic extract) Mineralölweichmacher ^{e} Sylvatraxx^{®} 4401, Kraton Chemicals SAS, Harz auf der Basis von Isopropenylbenzol (= Alpha-Methyl-Styrol-Harz), Erweichungspunkt = 85 °C (gemäß ASTM E 28), T_{g} = 45 °C ^{f} 3,3'-Bis(triethoxysilylpropyl)disulfid (TESPD) | | | | | |

Aus den Daten der Tabelle 1 wird ersichtlich, dass sich durch die kombinierte Anwesenheit des Harzes auf der Basis von Isopropenylbenzol mit Rapsöl in der Mischung 4(E) das Zusammenspiel der Mischungseigenschaften, die als Indikatoren für den Nassgriff, den Rollwiderstand und die Wintereigenschaften bei Verwendung in Reifen dienen, verbessert wird und zwar in überraschender Weise in einem Maße, das über einen additiven Effekt der Einzelmaßnahmen (alleiniger Austausch von 50 phr des Mineralölweichmachers durch Rapsöl 2(V) und alleiniger Austausch von 50 phr des Mineralölweichmachers durch AMS-Harz 3(V)) hinausgeht. Insgesamt ergibt sich somit eine Kautschukmischung bei der der Zielkonflikt aus Rollwiderstand, Nassgriff und Wintereigenschaften auf einem höheren Niveau gelöst wird.

## Patentansprüche

1. Schwefelvernetzbare Kautschukmischung, insbesondere für den Laufstreifen von Fahrzeugluftreifen, enthaltend wenigstens folgende Bestandteile:
- zumindest einen Dienkautschuk,
- 40 bis 80 phr (Gewichtsteile, bezogen auf 100 Gewichtsteile der gesamten Kautschuke in der Mischung) zumindest eines Harzes auf der Basis von Isopropenylbenzol,
- 40 bis 80 phr zumindest eines Weichmachers, der kein Mineralölweichmacher ist,
- 120 - 300 phr zumindest einer Kieselsäure und
- zumindest ein Silan-Kupplungsagens.

2. Schwefelvernetzbare Kautschukmischung nach Anspruch 1, **dadurch gekennzeichnet, dass** sie als Dienkautschuke zumindest ein natürliches Polyisopren (NR), zumindest einen Butadienkautschuk (BR) und zumindest einen lösungspolymerisierten Styrol-Butadien-Kautschuk (SSBR) enthält.

3. Schwefelvernetzbare Kautschukmischung nach Anspruch 2, **dadurch gekennzeichnet, dass** sie
- bis zu 20 phr zumindest eines natürlichen Polyisoprens (NR)
- 10 bis 80 phr, vorzugsweise 10 bis 30 phr, zumindest eines Butadienkautschuks (BR) und
- 10 bis 80 phr, vorzugsweise 60 bis 90 phr, zumindest eines lösungspolymerisierten Styrol-Butadien-Kautschuks (SSBR) enthält.

4. Schwefelvernetzbare Kautschukmischung nach zumindest einem der vorhergehenden Ansprüche, **dadurch gekennzeichnet, dass** zumindest einer der eingesetzten Dienkautschuke mit einer Funktionalisierung (Modifizierungen) endgruppenmodifiziert und/oder entlang der Polymerketten funktionalisiert ist, wobei es sich bei der Funktionalisierung um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handelt.

5. Schwefelvernetzbare Kautschukmischung nach Anspruch 4, **dadurch gekennzeichnet, dass** zumindest zwei Dienkautschuke mit Funktionalisierungen (Modifizierungen) endgruppenmodifiziert und/oder entlang der Polymerketten funktionalisiert sind.

6. Schwefelvernetzbare Kautschukmischung nach zumindest einem der vorhergehenden Ansprüche, **dadurch gekennzeichnet, dass** sie 40 bis 60 phr zumindest eines Harzes auf der Basis von Isopropenylbenzol aufweist.

7. Schwefelvernetzbare Kautschukmischung nach zumindest einem der vorhergehenden Ansprüche, **dadurch gekennzeichnet, dass** sie 40 bis 60 phr zumindest eines Weichmachers, der kein Mineralölweichmacher ist, enthält.

8. Schwefelvernetzbare Kautschukmischung nach zumindest einem der vorhergehenden Ansprüche, **dadurch gekennzeichnet, dass** der Weichmacher ein pflanzliches Öl ist.

9. Schwefelvernetzbare Kautschukmischung nach Anspruch 8, **dadurch gekennzeichnet, dass** der Weichmacher Rapsöl ist.

10. Schwefelvernetzbare Kautschukmischung nach zumindest einem der vorhergehenden Ansprüche, **dadurch gekennzeichnet, dass** sie 120 bis 200 phr Kieselsäure enthält.

11. Schwefelvernetzbare Kautschukmischung nach zumindest einem der vorhergehenden Ansprüche, **dadurch gekennzeichnet, dass** sie 1 - 15 phf (Gewichtsteile, bezogen auf 100 Gewichtsteile Kieselsäure) zumindest eines Silan-Kupplungsagenzes enthält.

12. Schwefelvernetzbare Kautschukmischung nach zumindest einem der vorhergehenden Ansprüche, **dadurch gekennzeichnet, dass** sie mehr als 5 phr Vernetzungschemikalien, enthaltend Schwefel und Vulkanisationsbeschleuniger, aufweist.

13. Fahrzeugluftreifen mit zumindest einem Bauteil, das aus einer mit Schwefel vulkanisierten Kautschukmischung nach einem der Ansprüche 1 bis 12 besteht.

14. Fahrzeugluftreifen nach Anspruch 13 mit einem Laufstreifen, dessen zumindest mit der Fahrbahn in Berührung kommender Teil aus einer mit Schwefel vulkanisierten Kautschukmischung nach einem der Ansprüche 1 bis 12 besteht.
